# EUROPÄISCHE PATENTSCHRIFT

(11) **EP 4 061 676 B1**
(45) Veröffentlichungstag und Bekanntmachung des Hinweises auf die Patenterteilung: **06.08.2025**
(21) Anmeldenummer: 20804222.6
(22) Anmeldetag: 09.11.2020
(51) Int. Cl.: B60T 1/10, F16D 61/00, B60T 1/087, B60T 10/02, B60L 50/00, B60L 1/00, B60T 13/58, F16D 57/04

(54) **VORRICHTUNG UND VERFAHREN ZUR ENERGIERÜCKGEWINNUNG FÜR EIN ELEKTRISCH ANGETRIEBENES KRAFTFAHRZEUG**
DEVICE AND METHOD FOR ENERGY RECOVERY FOR AN ELECTRICALLY DRIVEN MOTOR VEHICLE
DISPOSITIF ET PROCÉDÉ DE RÉCUPÉRATION D'ÉNERGIE POUR UN VÉHICULE À MOTEUR ÉLECTRIQUE

(30) Priorität: 18.11.2019 DE 102019007992
(43) Veröffentlichungstag der Anmeldung: 28.09.2022
(73) Patentinhaber: MAN Truck & Bus SE, 80995 München (DE)
(72) Erfinder: SCHYDLO, Alexander, 80995 München (DE); LANDSHERR, Thomas, 80995 München (DE)
(74) Vertreter: v. Bezold & Partner Patentanwälte - PartG mbB
(86) Internationale Anmeldenummer: PCT/EP2020/081453
(87) Internationale Veröffentlichungsnummer: WO 2021/099156

(56) Entgegenhaltungen:
- EP-A1- 3 018 306
- EP-A1- 3 023 622
- EP-B1- 3 018 306
- EP-B1- 3 023 622
- CN-U- 207 049 235
- DE-A1- 102017 202 322
- DE-A1- 3 137 197

## Beschreibung

Die Erfindung betrifft eine Vorrichtung zur Energierückgewinnung für ein elektrisch angetriebenes Kraftfahrzeug, vorzugsweise Nutzfahrzeug. Die Erfindung betrifft auch ein Verfahren zur Energierückgewinnung in einem elektrisch angetriebenen Kraftfahrzeug.

In elektrisch angetriebenen Kraftfahrzeugen steht keine Motorbremsleistung wie bei herkömmlichen Kraftfahrzeugen mit Verbrennungsmotor zur Verfügung, die die Betriebsbremse als Dauerbremsvorrichtung entlasten kann und damit die aktive Sicherheit erhöht. Dies ist insbesondere für schwere Nutzfahrzeuge relevant.

Die DE 10 2018 1030592 A1 offenbart ein System für einen Elektroantrieb mit einem zusätzlichen Bremssystem, das eine hydraulische Verzögerungsvorrichtung aufweist, die zur mechanischen Verbindung einem Ende eines Rotors eines Elektromotors ausgestaltet ist. Bei Aktivierung übt die hydraulische Verzögerungsvorrichtung eine Bremskraft über die mechanische Verbindung auf das axiale Ende des Rotors aus.

Die DE 10 2017 010 531 A1 offenbart ein Waste-Heat-Recovery(WHR)-System für ein Fahrzeug, das einen Verbrennungsmotor und einen hydraulischen Retarder umfasst. Das WHR-System umfasst einen WHR-Kreislauf mit einer Pumpe und einem ersten Verdampfer, in dem ein Arbeitsmedium durch Abgase vom Verbrennungsmotor erwärmt wird. In einem Expander wird Wärmeenergie vom Arbeitsmedium in mechanische Energie umgewandelt. Das WHR-System umfasst einen Wärmespeicher, der Wärmeenergie von einem Bremsprozess des hydraulischen Retarders speichert, und einen zweiten Verdampfer, in dem ein Arbeitsmedium durch Wärmeenergie vom Wärmespeicher erwärmt wird. Eine Ventilanordnung leitet den Fluss des Arbeitsmediums im WHR-Kreislauf zum ersten Verdampfer oder zum zweiten Verdampfer.

Das Dokument EP 3 018 306 A1 beschreibt ein System zur Rückgewinnung der Abwärme des Antriebsstrangs. Das System umfasst einen Wärmerückgewinnungskreislauf, der ein Wärmerückgewinnungsfluid durch einen Wärmerückgewinnungswärmetauscher zirkulieren lässt. Das System umfasst eine Umwandlungsvorrichtung zur Umwandlung von Wärmeenergie aus dem Wärmerückgewinnungsfluid in eine andere Energieform als Wärmeenergie.

Das Dokument DE 10 2017 202322 A1 betrifft ein Verfahren zur Umsetzung einer fahrerseitigen Verzögerungsanforderung in eine Fahrzeugverzögerung beim Betrieb eines Elektrofahrzeugs. Dabei erfolgt die Umsetzung zumindest auch unter Berücksichtigung eines Ladezustands wenigstens einer Traktionsbatterie des Elektrofahrzeugs.

Das Dokument DE 31 37197 A1 offenbart einen elektrohydraulischen Antrieb für Kraftfahrzeuge, insbesondere für Busse. Der Antrieb ist mit einem Elektromotor, einem Wandler und einem Getriebe sowie mit einem Schwungrad versehen, das über eine hydraulische Kupplung ein- und ausgeschaltet werden kann. Das Schwungrad ist mit einer Lichtmaschine verbunden. Eine Batterie kann an die Lichtmaschine angeschlossen werden.

Das Dokument CN 207 049 235 U beschreibt eine Energie-Rekuperation eines rein elektrisch angetriebenen Fahrzeugs mittels eines Retarders. Der Retarder umfasst einen Generator, eine Retarderausgangswelle, einen Retarder-Hüllkörper, eine Turbine, ein Pumpenlaufrad und eine Retardereingangswelle.

Der Erfindung liegt die Aufgabe zu Grunde, eine alternative und/oder verbesserte Technik zum Erhöhen eines Wirkungsgrads eines elektrisch angetriebenen Kraftfahrzeugs zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem Aspekt ist eine Vorrichtung zur Energierückgewinnung für ein elektrisch angetriebenes Kraftfahrzeug, vorzugsweise Nutzfahrzeug (z. B. Lastkraftwagen oder Omnibus) offenbart. Die Vorrichtung weist eine elektrische Antriebseinheit zum Antreiben des Kraftfahrzeugs und eine Dauerbremsvorrichtung, die als ein hydrodynamischer Retarder ausgebildet und trieblich mit der elektrischen Antriebseinheit verbunden oder verbindbar ist, auf. Die Vorrichtung weist eine Abwärmenutzungseinrichtung mit einer Expansionsmaschine (z. B. Turbine, Kolbenmaschine oder Scroll-Expander), die mit der Dauerbremsvorrichtung zur Energierückgewinnung aus einer bei einem Bremsen der Dauerbremsvorrichtung entstehenden Abwärme verbunden oder verbindbar ist, auf.

Die Vorrichtung ermöglicht, dass aus der Abwärme beim Bremsen Energie zurückgewonnen wird. Damit kann ein Wirkungsgrad des elektrischen Antriebsstrangs weiter gesteigert werden, da weniger Energie in Form von Abwärme verloren geht. Eine Reichweite des Kraftfahrzeugs kann so ebenfalls erhöht werden.

In einem Ausführungsbeispiel kann die Abwärmenutzungseinrichtung auf einem Clausius-Rankine-Kreisprozess oder auf einem Joule-Brayton-Kreisprozess basieren.

In einem weiteren Ausführungsbeispiel ist in der Dauerbremsvorrichtung ein Wärmeübertrager integriert, der zum Übertragen einer Abwärme der Dauerbremsvorrichtung (z. B. von einem Fluidkreislauf der Dauerbremsvorrichtung) auf einen Fluidkreislauf der Abwärmenutzungseinrichtung ausgebildet ist. Der Wärmeübertrager kann somit platzsparend direkt in der Dauerbremsvorrichtung angeordnet sein. So kann auch besonders viel beim Bremsen entstehende Abwärme zu der Abwärmenutzungseinrichtung übertragen werden.

In einem weiteren Ausführungsbeispiel ist ein Wärmeübertrager außerhalb der Dauerbremsvorrichtung angeordnet, wobei der Wärmeübertrager zum Übertragen einer Abwärme der Dauerbremsvorrichtung (z. B. von einem Fluidkreislauf der Dauerbremsvorrichtung) auf einen Fluidkreislauf der Abwärmenutzungseinrichtung ausgebildet ist. Eine solche Anordnung ist vergleichsweise einfach zu realisieren und kann daher bspw. unter Kostengesichtspunkten oder aus Bauraumgründen vorteilhaft sein.

In einer Weiterbildung ist der Wärmeübertrager ein Verdampfer, der zum Verdampfen eines Arbeitsfluids der Abwärmenutzungseinrichtung ausgebildet ist (z. B. zum Realisieren des Clausius-Rankine-Kreisprozesses). Alternativ kann der Wärmeübertrager bspw. als ein Flüssigkeit-Gas-Wärmeübertrager, in dem ein gasförmiges Arbeitsfluid der Abwärmenutzungseinrichtung erwärmbar ist, ausgebildet sein (z. B. zum Realisieren des Joule-Brayton-Kreisprozesses).

In einer Ausführungsform weist die Abwärmenutzungseinrichtung einen Expansionsmaschinen-Bypass auf, der die Expansionsmaschine umgeht. Vorzugsweise kann die Abwärmenutzungseinrichtung zusätzlich eine Ventileinrichtung aufweisen, die zum Anpassen eines Fluidstroms durch die Expansionsmaschine und/oder den Expansionsmaschinen-Bypass angeordnet ist. Damit kann die Steuerbarkeit der Abwärmenutzungseinrichtung verbessert werden. Bspw. kann so eine Überbelastung der Expansionsmaschine verhindert werden.

In einer Weiterbildung weist die Abwärmenutzungseinrichtung eine (z. B. isenthalpe) Drossel auf, die in dem Expansionsmaschinen-Bypass angeordnet ist. Vorzugsweise kann die Drossel integriert mit oder separat zu der Ventileinrichtung vorgesehen sein.

In einer weiteren Ausführungsform weist die Abwärmenutzungseinrichtung eine Steuereinheit auf, die dazu ausgebildet ist, die Ventileinrichtung in Abhängigkeit von einem Betriebsparameter (z. B. Drehzahl) der Expansionsmaschine und/oder einem Fluidparameter (z. B. Temperatur, Druck und/oder Massenstrom) eines Arbeitsfluids der Abwärmenutzungseinrichtung, vorzugsweise stromaufwärts und/oder stromabwärts der Expansionsmaschine, zu betätigen.

Vorzugsweise kann sich der Begriff "Steuereinheit" auf eine Elektronik (z. B. mit Mikroprozessor(en) und Datenspeicher) und/oder mechanische Steuerung und/oder hydraulische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Die Abwärmenutzungseinrichtung weist erfindungsgemäß einen, vorzugsweise lüftergekühlten, Kühler, vorzugsweise einen Kondensator oder einen Gaskühler, auf, der stromabwärts der Expansionsmaschine angeordnet ist. Der Lüfter kann bspw. elektrisch angetrieben sein und/oder mittels der Steuereinrichtung gesteuert sein, vorzugsweise in Abhängigkeit von mindestens einem Fluidparameter des Arbeitsfluids der Abwärmenutzungseinrichtung, z. B. stromaufwärts oder stromabwärts des Kühlers.

Die Abwärmenutzungseinrichtung weist erfindungsgemäß einen Zwischenwärmeübertrager (z. B. Vorwärmer) auf, der zum thermischen Koppeln einer Fluidleitung (z. B. direkt) stromaufwärts des Kühlers mit einer Fluidleitung (z. B. direkt) stromabwärts des Kühlers angeordnet ist. Erfindungsgemäß weist die Abwärmenutzungseinrichtung ferner eine Ventilvorrichtung auf, die zum Anpassen eines Fluidstroms durch den Kühler und/oder den Zwischenwärmeübertrager angeordnet ist. Somit kann ein Rekuperieren ermöglicht werden, wenn die Fluidparameter des Arbeitsfluids stromabwärts der Expansionsmaschine noch höher als Umgebungsniveau sind.

Alternativ weist die Abwärmenutzungseinrichtung erfindungsgemäß einen Kühler-Bypass, der den Kühler umgeht, auf. Erfindungsgemäß weist die Abwärmenutzungseinrichtung eine Ventilvorrichtung auf, die zum Anpassen eines Fluidstroms durch den Kühler und/oder den Kühler-Bypass angeordnet ist. Bspw. kann in dem Kühler-Bypass eine Drossel angeordnet sein. Somit kann ebenfalls ein Rekuperieren ermöglicht werden, wenn die Fluidparameter des Arbeitsfluids stromabwärts der Expansionsmaschine noch höher als Umgebungsniveau sind.

Alternativ weist die Abwärmenutzungseinrichtung erfindungsgemäß einen Wärmeübertrager, vorzugsweise einen Verdampfer oder einen Vorwärmer, einer Wärmepumpe (z. B einer Fahrzeugklimaanlage) der Vorrichtung auf, wobei der Wärmeübertrager vorzugsweise zum thermischen Koppeln mit einer Fluidleitung (z. B. direkt) stromaufwärts des Kühlers angeordnet ist. Erfindungsgemäß ist eine Ventilvorrichtung vorgesehen, die zum Anpassen eines Fluidstroms durch den Kühler und/oder den Wärmeübertrager angeordnet ist. Somit kann ebenfalls ein Rekuperieren ermöglicht werden, wenn die Fluidparameter des Arbeitsfluids stromabwärts der Expansionsmaschine noch höher als Umgebungsniveau sind. In einer Weiterbildung weist die Abwärmenutzungseinrichtung eine Steuereinheit auf, die dazu ausgebildet ist, die Ventilvorrichtung in Abhängigkeit von einem Fluidparameter (z. B. Temperatur, Druck und/oder Massenstrom) eines Arbeitsfluids der Abwärmenutzungseinrichtung, vorzugsweise (z. B. direkt) stromaufwärts und/oder (z. B. direkt) stromabwärts des Kühlers, zu betätigen.

In einem Ausführungsbeispiel ist die elektrische Antriebseinheit als eine elektrische Zentralantriebseinheit ausgeführt. Vorzugsweise kann die Dauerbremsvorrichtung direkt trieblich mit der elektrischen Zentralantriebseinheit, einem Getriebe der Vorrichtung oder einem Rad der Vorrichtung verbunden sein.

In einem weiteren Ausführungsbeispiel ist die elektrische Antriebseinheit als ein elektrischer Raddirektantrieb (z. B. Radnabenmotor) ausgeführt. Vorzugsweise kann die Dauerbremsvorrichtung direkt trieblich mit dem Raddirektantrieb oder einem Rad der Vorrichtung verbunden sein.

In einem weiteren Ausführungsbeispiel ist die elektrische Antriebseinheit als ein radnaher elektrischer Einzelradantrieb ausgeführt. Vorzugsweise kann die Dauerbremsvorrichtung direkt trieblich mit dem radnahen elektrischen Einzelradantrieb, einem Getriebe, vorzugsweise einem Planentengetriebe, der Vorrichtung oder einem Rad der Vorrichtung verbunden sein.

In einer Ausführungsform weist die Abwärmenutzungseinrichtung Wasser, ein Wasser-Glykol-Gemisch, ein organisches Fluid, ein anorganisches Fluid und/oder ein Alkohol als Arbeitsfluid auf.

In einer weiteren Ausführungsform ist die Abwärmenutzungseinrichtung dazu ausgebildet, eine mittels der Expansionsmaschine zurückgewonnene Energie elektrisch und/oder mechanisch zu speichern (z. B. Schwungradspeicher oder Batterie) und/oder (z. B. direkt oder indirekt) in ein Bordnetz des Kraftfahrzeugs einzuspeisen.

In einer Ausführungsvariante ist die Abwärmenutzungseinrichtung mit oder ohne Arbeitsfluid-Phasenumwandlung betreibbar.

In einer weiteren Ausführungsvariante weist die Abwärmenutzungseinrichtung eine Fördervorrichtung, vorzugsweise eine Pumpe oder einen Verdichter, auf. Vorzugsweise kann die Fördervorrichtung stromaufwärts von der Expansionsmaschine angeordnet sein, wobei z. B. die Fördervorrichtung trieblich mit der Expansionsmaschine gekoppelt sein kann.

In einem Ausführungsbeispiel ist die Abwärmenutzungseinrichtung zusätzlich mit einer Brennkraftmaschine zur Energierückgewinnung aus einer Abwärme z. B. aus einem Kühlmittel und/oder einem Abgas der Brennkraftmaschine verbunden (z. B. mittels eines weiteren Wärmeübertragers). Alternativ oder zusätzlich kann die Abwärmenutzungseinrichtung zusätzlich mit einer Energieversorgungseinrichtung (z. B. Batterie, Stromwandler (insb. DC-DC-Wandler), Stromverteiler und/oder Leistungselektronik), die die elektrische Antriebseinheit mit elektrischer Energie versorgt, zur Energierückgewinnung aus einer Abwärme der Energieversorgungseinrichtung verbunden sein (z. B. mittels eines weiteren Wärmeübertragers). Alternativ oder zusätzlich kann die Abwärmenutzungseinrichtung zusätzlich mit der elektrischen Antriebseinheit zur Energierückgewinnung aus einer Abwärme der elektrischen Antriebseinheit verbunden sein (z. B. mittels eines weiteren Wärmeübertragers).

Gemäß einem weiteren Aspekt ist ein Kraftfahrzeug (z. B. reines Elektro-Kraftfahrzeug oder Hybrid-Kraftfahrzeug), vorzugsweise Nutzfahrzeug (z. B. Lastkraftwagen oder Omnibus), offenbart. Das Kraftfahrzeug weist eine Vorrichtung wie hierin offenbart auf.

Gemäß einem weiteren Aspekt ist ein Verfahren zur Energierückgewinnung in einem elektrisch angetriebenen Kraftfahrzeug, vorzugsweise wie hierin offenbart, offenbart. Das Kraftfahrzeug weist eine als ein hydrodynamischer Retarder ausgebildete Dauerbremsvorrichtung und eine Abwärmenutzungseinrichtung mit einer Expansionsmaschine auf. Das Verfahren weist ein Bremsen des Kraftfahrzeugs mittels der Dauerbremsvorrichtung und ein Antreiben der Expansionsmaschine mittels einer Abwärme der Dauerbremsvorrichtung auf.

In einem Ausführungsbeispiel weist das Verfahren ferner ein Verdampfen oder Erwärmen eines (z. B. flüssigen oder gasförmigen) Arbeitsfluids in oder außerhalb der Dauerbremsvorrichtung mittels der Abwärme der Dauerbremsvorrichtung und Zuführen des Arbeitsfluids zu der Expansionsmaschine auf.

In einem weiteren Ausführungsbeispiel weist das Verfahren ein Umgehen der Expansionsmaschine mittels eines Bypasses, wenn ein Betriebsparameter (z. B. Drehzahl) der Expansionsmaschine und/oder ein Fluidparameter (z. B. Druck, Temperatur und/oder Massenstrom) eines Arbeitsfluids einen vorbestimmten Wert überschreitet, auf, vorzugsweise ferner mit Drosseln des Arbeitsfluids beim Umgehen der Expansionsmaschine.

In einem weiteren Ausführungsbeispiel weist das Verfahren ein Speichern von elektrischer und/oder mechanischer Energie, die aus dem Antreiben der Expansionsmaschine gewonnen wurde, auf.

In einem weiteren Ausführungsbeispiel weist das Verfahren ein Rekuperieren von Wärmeenergie aus einem Arbeitsfluidstrom stromabwärts der Expansionsmaschine auf.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

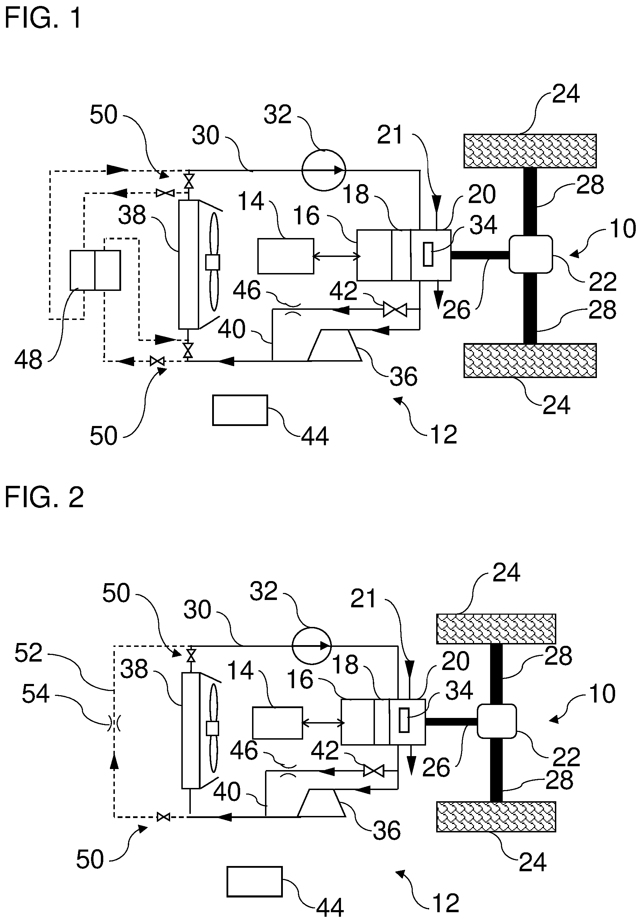

- Figuren 1-7: schematische Ansichten teilweise unterschiedlicher elektrischer Antriebsstränge eines Kraftfahrzeugs mit unterschiedlichen Abwärmenutzungseinrichtungen.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Die Figuren 1 bis 7 zeigen elektrische Antriebsstränge 10, die jeweils mit einer Abwärmenutzungseinrichtung 12 verbunden sind. Die elektrischen Antriebsstränge 10 können in einem Kraftfahrzeug zum Antreiben des Kraftfahrzeugs umfasst sein. Bevorzugt kann das Kraftfahrzeug als ein Nutzfahrzeug, zum Beispiel ein Lastkraftwagen oder ein Omnibus, ausgeführt sein.

Die Figur 1 zeigt einen elektrischen Antriebsstrang 10. Der elektrische Antriebsstrang 10 weist beispielsweise eine Energieversorgungseinrichtung 14, eine elektrische Antriebseinheit 16, ein Getriebe 18, eine Dauerbremsvorrichtung 20, ein Differentialgetriebe 22 und Räder 24 auf.

Die Energieversorgungseinrichtung 14 kann alle Komponenten aufweisen, die zum Versorgen der elektrischen Antriebseinheit 16 mit elektrischer Energie erforderlich sind. Beispielsweise kann die Energieversorgungseinrichtung 14 eine Ladevorrichtung, einen elektrischen Energiespeicher, einen Stromwandler (zum Beispiel DC-DC-Wandler), einen Stromverteiler, eine Leistungselektronik und/oder eine Brennstoffzellenvorrichtung aufweisen.

Die elektrische Antriebseinheit 16 wird von der Energieversorgungseinrichtung 14 mit elektrischem Strom versorgt. Die elektrische Antriebseinheit 16 ist als eine elektrische Zentralantriebseinheit ausgeführt. Vorzugsweise kann die elektrische Antriebseinheit 16 als ein Längsmotor angeordnet sein. Die elektrische Antriebseinheit 16 ist trieblich mit dem Getriebe 18 und der Dauerbremsvorrichtung 20 verbunden.

Es ist möglich, dass der elektrische Antriebsstrang 10 Teil eines Hybridantriebsstrangs ist, der zusätzlich eine Brennkraftmaschine zum Antreiben des Kraftfahrzeugs aufweist.

Das Getriebe 18 kann beispielsweise je nach Ausführung der elektrischen Antriebseinheit 16 optional sein. Das Getriebe 18 kann beispielsweise als ein Untersetzungsgetriebe und/oder ein automatisches Schaltgetriebe ausgeführt sein.

Die Dauerbremsvorrichtung 20 ist als ein hydrodynamischer Retarder bzw. eine hydrodynamische Verzögerungsbremse ausgeführt. Die Dauerbremsvorrichtung 20 kann einen Fluidkreislauf 21 (nur ausschnittsweise dargestellt) aufweisen. Im Fluidkreislauf 21 kann ein Arbeitsfluid, z. B. Öl, Wasser oder ein Wasser-Glykol-Gemisch zirkulieren, wenn die Dauerbremsvorrichtung 20 aktiviert ist. Es ist möglich, dass eine Pumpe und optional ein Kühler in dem Fluidkreislauf 21 integriert ist.

Die Dauerbremsvorrichtung 20 kann ferner beispielsweise einen Rotor, der mit dem elektrischen Antriebsstrang 10 trieblich verbunden oder verbindbar ist, und einen feststehenden Stator aufweisen. Die Dauerbremsvorrichtung 20 kann zum Bremsen des Kraftfahrzeugs dadurch aktiviert werden, dass das Arbeitsfluid mittels des Fluidkreislaufs 21 zu der Dauerbremsvorrichtung 20 geleitet wird. Durch Reibung des Arbeitsfluids beim Durchströmen der Dauerbremsvorrichtung 20 wird Bewegungsenergie des Rotors in Wärme umgewandelt. Die Temperatur und die Enthalpie des Arbeitsfluids wird erhöht. Der elektrische Antriebsstrang 10 wird abgebremst. Die Dauerbremsvorrichtung 20 kann das Prinzip der durch die entstehende Reibung mit steigender Temperatur steigenden Viskosität nutzen. Die Bremswirkung der Dauerbremsvorrichtung 20 kann von der Fahrzeuggeschwindigkeit abhängig sein.

Die Dauerbremsvorrichtung 20 ist an einer geeigneten Position im elektrischen Antriebsstrang 10 zum Bewirken einer Bremsleistung integriert. Die Dauerbremsvorrichtung 20 kann direkt oder indirekt, insbesondere abhängig vom verwendeten Antriebskonzept, mit der elektrischen Antriebseinheit 16 trieblich gekoppelt sein. Die Dauerbremsvorrichtung 20 kann beispielsweise zumindest teilweise in das Getriebe 18 integriert sein bzw. direkt trieblich mit dem Getriebe 18 verbunden oder verbindbar sein.

Im in Figur 1 dargestellten Ausführungsbeispiel ist die Dauerbremsvorrichtung 20 trieblich zwischen dem Getriebe 18 und dem Differentialgetriebe 22 angeordnet. Eine Welle 26 kann die Dauerbremsvorrichtung 20 trieblich mit dem Differentialgetriebe 22 verbinden. Die Welle 26 kann zweckmäßig als eine Gelenkwelle ausgeführt sein. Es ist möglich, dass die Dauerbremsvorrichtung 20 beispielsweise zumindest teilweise in der elektrischen Antriebseinheit 16, dem Differentialgetriebe 22 oder den Rädern 24 integriert bzw. direkt trieblich mit diesen verbunden ist. Es ist auch möglich, dass die Dauerbremsvorrichtung 20 im elektrischen Antriebstrang 10 zwischengeschaltet oder nebengeschaltet ist.

Das Differentialgetriebe 22 treibt mittels Radwellen 28 die Räder 24 an.

Die Abwärmenutzungseinrichtung 12 ist dazu ausgebildet, aus beim Bremsen der hydrodynamischen Dauerbremsvorrichtung 20 entstehender Abwärme nutzbare Energie (zum Beispiel elektrischer Energie oder mechanische Energie) zurückzugewinnen.

Im Ausführungsbeispiel von Figur 1 realisiert die Abwärmenutzungseinrichtung 12 einen Clausius-Rankine-Kreisprozess. Das Arbeitsfluid der Abwärmenutzungseinrichtung 12 wird beim Zirkulieren einer Phasenumwandlung unterzogen.

Die Abwärmenutzungseinrichtung 12 weist einen Fluidkreislauf 30 mit einer Fördervorrichtung 32, einem Wärmeübertrager 34, einer Expansionsmaschine 36 und einem Kühler 38 auf. Die Fördervorrichtung 32 ist stromabwärts des Kühlers 38 angeordnet. Der Wärmeübertrager 34 ist stromabwärts der Fördervorrichtung 32 angeordnet. Die Expansionsmaschine 36 ist stromabwärts des Wärmeübertragers 34 angeordnet. Der Kühler 38 ist stromabwärts der Expansionsmaschine 36 angeordnet.

Die Fördervorrichtung 32 fördert ein im Fluidkreislauf 30 zirkulierendes Arbeitsfluid. Das Arbeitsfluid kann beispielsweise Wasser, ein Wasser-Glykol-Gemisch, ein organisches Fluid, ein anorganisches Fluid oder ein Alkohol sein oder aufweisen. Die Fördervorrichtung 32 fördert das Arbeitsfluid von dem Kühler 38 zu dem Wärmeübertrager 34. Im Ausführungsbeispiel von Figur 1 ist die Fördervorrichtung 32 als eine Pumpe zum Fördern des Arbeitsfluids im flüssigen Aggregatzustand ausgeführt.

Der Wärmeübertrager 34 ist in der Dauerbremsvorrichtung 20 integriert. Der Wärmeübertrager 34 überträgt die beim Bremsen entstehende Abwärme des Arbeitsfluids des Fluidkreislaufes 21 in der Dauerbremsvorrichtung 20 auf das Arbeitsfluid des Fluidkreislaufes 30 der Abwärmenutzungseinrichtung 12. Im Ausführungsbeispiel von Figur 1 ist der Wärmeübertrager 34 als ein in der Dauerbremsvorrichtung 20 integrierter Verdampfer ausgeführt. Der Verdampfer nutzt die Abwärme des Arbeitsfluids des Fluidkreislaufes 21 zum Erwärmen und Verdampfen des Arbeitsfluids des Fluidkreislaufes 30 der Abwärmenutzungseinrichtung 12. Eine Enthalpie des Arbeitsfluids der Abwärmenutzungseinrichtung 12 wird erhöht. Das Arbeitsfluid der Abwärmenutzungseinrichtung 12 verlässt die Dauerbremsvorrichtung 20 im gasförmigen Zustand, zum Beispiel in Form von Nassdampf oder überhitztem Dampf.

In der Expansionsmaschine 36 wird die innere Energie des Arbeitsfluids durch Entspannen des Arbeitsfluids abgebaut und dabei teilweise in mechanische Energie umgewandelt.

Dadurch kann beispielsweise ein Ausgabeelement, wie eine Abtriebswelle, der Expansionsmaschine 36 angetrieben werden. Die Expansionsmaschine 36 kann beispielsweise als eine Turbine (wie in Figur 1 dargestellt), eine Kolbenmaschine oder ein Scroll-Expander ausgeführt sein.

Das Ausgabeelemente der Expansionsmaschine 36 können beispielsweise mit einem mechanischen Energiespeicher, zum Beispiel einem mechanischen Schwungradspeicher, trieblich verbunden sein, um die zurückgewonnene mechanische Energie zwischenzuspeichern. Zu einem späteren Zeitpunkt kann diese mechanische Energie beispielsweise in den elektrischen Antriebsstrang 10 eingekoppelt und zum Antreiben des Kraftfahrzeugs verwendet werden. Die Kopplung kann beispielsweise im Bereich der elektrischen Antriebseinheit 16, des Getriebes 18, der Welle 26, des Differentialgetriebe 22, der Radwelle 28/oder der Räder 24 erfolgen. Es ist auch möglich, dass das Ausgabeelement der Expansionsmaschine 36 trieblich mit der Fördervorrichtung 32 verbunden ist.

Die Ausgabeelemente der Expansionsmaschine 36 kann beispielsweise auch mit einem Generator trieblich verbunden sein, um elektrische Energie aus der zurückgewonnene mechanischen Energie zu gewinnen. Die elektrische Energie kann beispielsweise in einer Batterie (zum Beispiel der Energieversorgungseinrichtung 14) zwischengespeichert und/oder direkt in ein elektrisches Bordnetz des Kraftfahrzeugs eingespeist werden.

Im Kühler 38 wird das Arbeitsfluid abgekühlt. Der Kühler 38 kann mittels eines vorzugsweise elektrisch angetriebenen Lüfters gekühlt sein. Im Ausführungsbeispiel von Figur 1 ist der Kühler 38 als ein Kondensator ausgeführt. Der Kondensator kondensiert das Arbeitsfluid vollständig, sodass die Fördervorrichtung 32 das flüssige Arbeitsfluid wieder ansaugen kann.

Es ist möglich, dass die Abwärmenutzungseinrichtung 12 einen Bypass 40 aufweist. Der Bypass 40 umgeht die Expansionsmaschine 36. Der Bypass 40 zweigt von einer Fluidleitung des Fluidkreislaufes 30 ab, die den Wärmeübertrager 34 mit der Expansionsmaschine 36 verbindet. Der Bypass 40 mündet in eine Fluidleitung des Fluidkreislaufes 30, die die Expansionsmaschine 36 mit dem Kühler 38 verbindet.

Zum Anpassen eines Fluidstroms durch den Bypass 40 und die Expansionsmaschine 36 ist eine Ventileinrichtung 42 vorgesehen. Die Ventileinrichtung 42 kann eines oder mehrere Ventile aufweisen. Die Ventileinrichtung 42 kann im Bypass 40, an der Abzweigung des Bypasses von der Fluidleitung stromaufwärts der Expansionsmaschine 36 und/oder in der Fluidleitung stromaufwärts der Expansionsmaschine 36 angeordnet sein.

Der Bypass 40 kann vorzugsweise den Zweck haben, Arbeitsfluid, wenn nötig, umzuleiten, um einen maximalen Druck vor bzw. in der Expansionsmaschine 36 nicht zu überschreiten. Zum Steuern der Ventileinrichtung 42 kann eine Steuereinheit 44 vorgesehen sein. Die Steuereinheit 44 kann die Ventileinrichtung 42 in Abhängigkeit von mindestens einem Fluidparameter (z. B. Temperatur, Druck und/oder Massenstrom) des Arbeitsfluids der Abwärmenutzungseinrichtung 12 betätigen. Der mindestens eine Fluidparameter kann gemessen oder geschätzt sein. Der mindestens eine Fluidparameter kann sich zweckmäßig auf einen Zustand des Arbeitsfluids stromabwärts des Wärmeübertragers 34, stromaufwärts der Expansionsmaschine 36 und/oder stromabwärts der Expansionsmaschine 36 beziehen. Alternativ oder zusätzlich kann die Steuereinheit 44 die Ventileinrichtung bspw. in Abhängigkeit von einem Betriebsparameter (z. B. Drehzahl) der Expansionsmaschine 36 betätigen.

Beispielsweise kann, wenn ein aktueller Wert eines Fluidparameters oder eines Betriebsparameters einen vorbestimmten Wert (z. B. Fluiddruck oder Drehzahl) überschreitet, die Steuereinheit 44 die Ventileinrichtung 42 zum zumindest teilweisen Umleiten des Arbeitsfluids durch den Bypass 40 betätigen. Beispielsweise kann, wenn ein aktueller Wert eines Fluidparameters oder eines Betriebsparameters einen vorbestimmten Wert (z. B. Fluiddruck oder Drehzahl) unterschreitet, die Steuereinheit 44 die Ventileinrichtung 42 zum zumindest teilweisen Schließen der Fluidverbindung durch den Bypass 40 betätigen.

Es ist möglich, dass eine Drossel 46 im Bypass 40 angeordnet ist. Die Drossel 46 kann das den Bypass 40 durchströmende Arbeitsfluid drosseln, z. B. isenthalp. Die Drossel 46 kann separat zu der Ventilvorrichtung 42 vorgesehen sein oder in einem Ventil der Ventileinrichtung 42 integriert sein.

Die Abwärmenutzungseinrichtung 12 kann optional ferner einen Zwischenwärmeübertrager 48 und eine Ventilvorrichtung 50 aufweisen.

Der Zwischenwärmeübertrager 48 kann Arbeitsfluid von stromaufwärts des Kühlers 38 thermisch mit Fluid stromabwärts des Kühlers 38 koppeln. Das Arbeitsfluid stromabwärts des Kühlers 38 kann somit vorgewärmt werden. Der Zwischenwärmeübertrager 48 kann Wärme vom Arbeitsfluid einer Fluidleitung stromaufwärts des Kühlers 38, die bspw. als ein Bypass stromaufwärts des Kühlers 38 angeordnet ist, auf das Arbeitsfluid in einer Fluidleitung stromabwärts des Kühlers 38, die bspw. als ein Bypass stromabwärts des Kühlers 38 angeordnet ist, übertragen. Der Zwischenwärmeübertrager 48 kann als ein Flüssigkeit-Flüssigkeit-Wärmeübertrager ausgeführt sein.

Die Ventilvorrichtung 50 ist zum Anpassen des Fluidstroms zu dem Kühler 38 und dem Zwischenwärmeübertrager 48 angeordnet. Die Ventilvorrichtung 50 kann hierfür beliebig angeordnet sein und bspw. mehrere Ventile aufweisen. Die Ventilvorrichtung 50 kann bspw. auch Rückschlagventile aufweisen.

Die Steuereinheit 44 kann die Ventilvorrichtung 50 in Abhängigkeit von mindestens einem aktuellen Fluidparameter des Arbeitsfluids (z. B. Temperatur) stromaufwärts und/oder stromabwärts des Kühlers 38 betätigen. Der Fluidparameter kann gemessen oder geschätzt sein.

Der Zwischenwärmeübertrager 48 kann zum Einsatz kommen, wenn ein Fluidparameter des Arbeitsfluids stromabwärts der Expansionsmaschine 36 und stromaufwärts des Kühlers 38 noch über einem Umgebungsniveau liegt, um ein weiteres Rekuperieren zu ermöglichen. Die Figur 2 zeigt ein gegenüber der Figur 1 modifiziertes Ausführungsbeispiel. In Figur 2 ist statt des Zwischenwärmeübertragers 48 von Figur 1 ein Bypass 52 angeordnet.

Der Bypass 52 umgeht den Kühler 38. Im Bypass 52 kann eine Drossel 54 angeordnet sein. Die Drossel 54 führt zu vollständigen Kondensation des Arbeitsfluids. Die Steuereinheit 44 kann die Ventilvorrichtung 50 wiederum in Abhängigkeit von mindestens einem aktuellen Fluidparameter des Arbeitsfluids (z. B. Temperatur) stromaufwärts und/oder stromabwärts des Kühlers 38 betätigen, um den Bypass 52 zumindest teilweise zu durchfließen oder nicht.

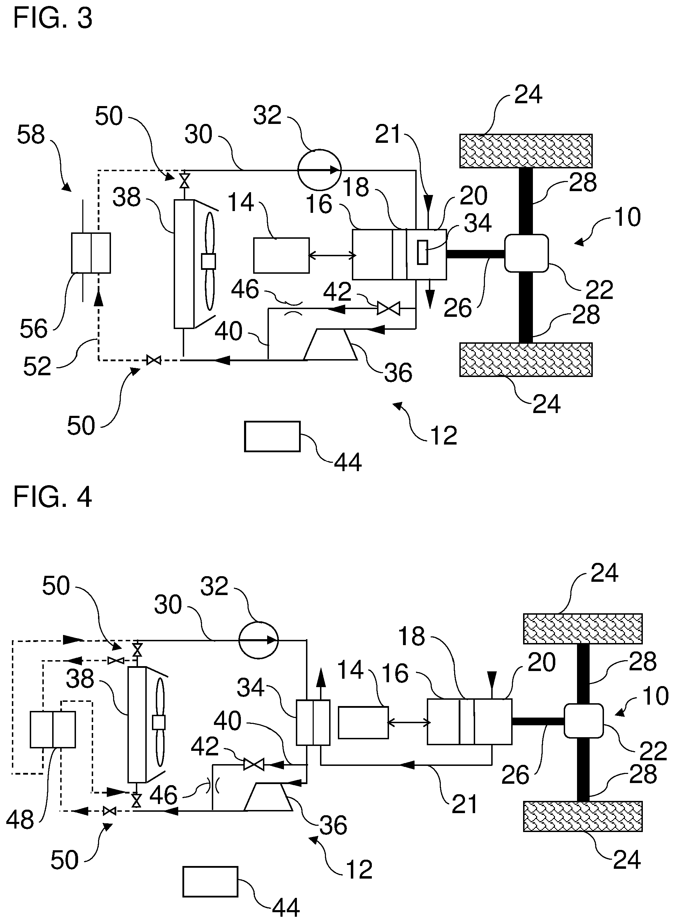

Die Figur 3 zeigt ein gegenüber der Figur 2 modifiziertes Ausführungsbeispiel. In Figur 3 ist in dem Bypass 52 ein Wärmeübertrager 56 angeordnet. Der Wärmeübertrager 56 kann Teil einer Wärmepumpe 58 (nur abschnittsweise dargestellt) sein. Der Wärmeübertrager 56 kann bspw. als ein Verdampfer oder ein Vorwärmer der Wärmepumpe 58 ausgeführt sein. Mittels der Wärmepumpe 58 kann bspw. eine Klimatisierung des Kraftfahrzeugs vorgenommen werden. Es ist auch möglich, dass der Wärmeübertrager 56 bspw. in einer Fluidleitung angeordnet ist, die bspw. als ein Bypass stromaufwärts des Kühlers 38 angeordnet ist (siehe z. B. Figur 1).

Die in den Figuren 1 bis 3 dargestellten Ausführungsbeispiel ermöglichen somit ein Rekuperieren von Wärmeenergie aus einem Arbeitsfluidstrom stromabwärts von der Expansionsmaschine 36.

Die Figur 4 zeigt ein gegenüber der Figur 1 modifiziertes Ausführungsbeispiel. In der Figur 1 ist der Fluidkreislauf 30 als Primärkreis ausgeführt, der durch die Dauerbremsvorrichtung 20 geführt ist. In Figur 4 ist der Fluidkreislauf 30 als ein Sekundärkreis ausgeführt, der separat zu der Dauerbremsvorrichtung 20 angeordnet ist. Der als Verdampfer ausgeführte Wärmeübertrager 34 zwischen dem Fluidkreislauf 21 und dem Fluidkreislauf 30 ist außerhalb der Dauerbremsvorrichtung 20 angeordnet.

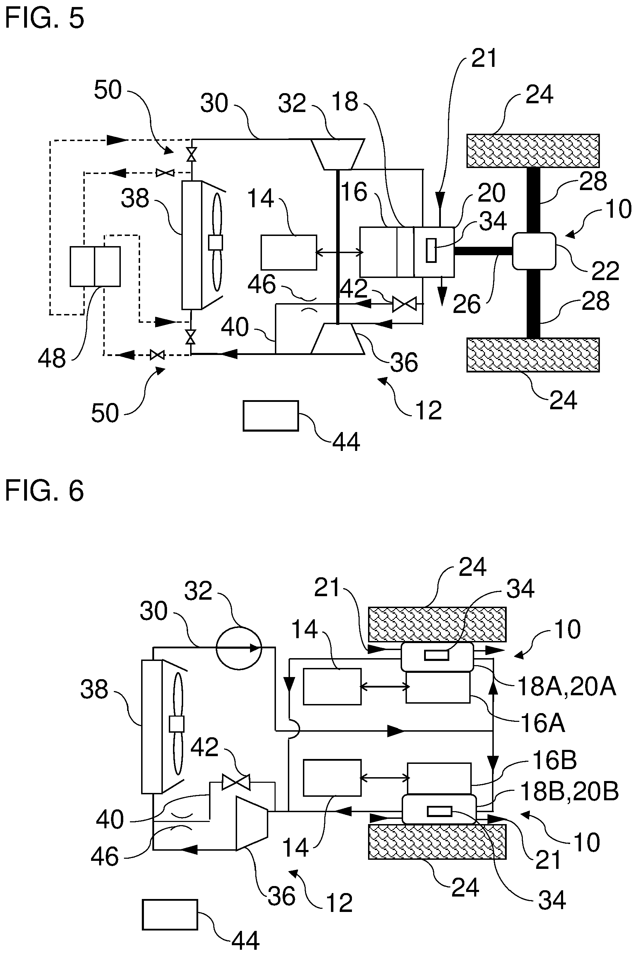

Die Figur 5 zeigt ein gegenüber der Figur 1 modifiziertes Ausführungsbeispiel. In der Figur 1 realisiert die Abwärmenutzungseinrichtung 12 einen Clausius-Rankine-Kreisprozess (linksläufiger Kreisprozess). In der Figur 5 realisiert die Abwärmenutzungseinrichtung 12 hingegen einen Joule-Brayton-Kreisprozess (rechtsdrehender Kreisprozess).

Die Fördervorrichtung 32 ist als ein Verdichter ausgeführt. Die Expansionsmaschine 36 kann die Fördervorrichtung 32 direkt antreiben. Der Wärmeübertrager 34 ist dazu ausgebildet, die Abwärme des flüssigen Arbeitsfluids der Dauerbremsvorrichtung 20 auf das gasförmige Arbeitsfluid des Fluidkreislaufs 30 zu übertragen (Flüssigkeit-Gas-Wärmeübertrager). Es findet keine Phasenumwandlung des Arbeitsfluids statt. Der Wärmeübertrager 34 kann in der Dauerbremsvorrichtung 20 integriert sein, wie in Figur 5 dargestellt ist. In Anlehnung an Figur 4 ist es bspw. auch möglich, dass der Wärmeübertrager 34 extern der Dauerbremsvorrichtung 20 angeordnet ist. Der Kühler 38 ist als ein Gaskühler ausgeführt. Der optionale Zwischenwärmeübertrager 48 kann als ein Gas-zu-Gas-Wärmeübertrager ausgeführt sein. Das Arbeitsfluid ist im gesamten Fluidkreislauf 30 gasförmig.

Die Figur 6 zeigt ein gegenüber der Figur 1 modifiziertes Ausführungsbeispiel. Eine erste Antriebseinheit 16A und eine zweite Antriebseinheit 16B sind jeweils als radnahe Antriebseinheiten angeordnet. Die Antriebseinheiten 16A, 16B treiben jeweils direkt das jeweilige Rad 24 über das jeweilige Getriebe 18A, 18B an. Die Getriebe 18A, 18B sind zweckmäßig als Planetengetriebe ausgeführt. Es sind zwei Dauerbremsvorrichtungen 20A, 20B mit jeweils einem eigenen Wärmeübertrager 34 vorgesehen. Die Dauerbremsvorrichtungen 20A, 20B können bspw. direkt trieblich mit der jeweiligen Antriebseinheit 16A oder 16B, dem jeweiligen Getriebe 18A oder 18B oder der jeweiligen Radnabe eines der Räder 24 verbunden sein bzw. in diese integriert sein.

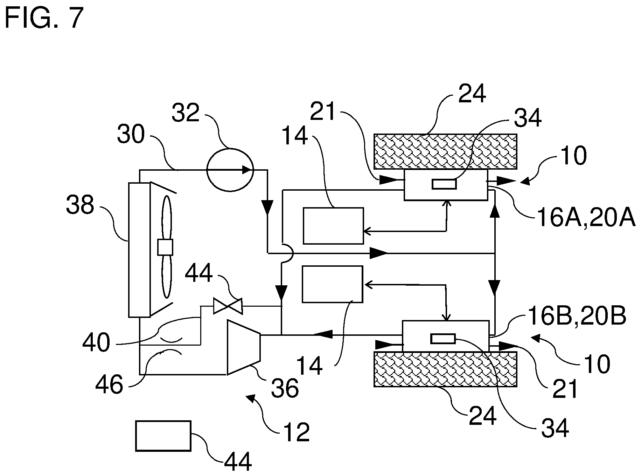

Die Figur 7 zeigt ein gegenüber der Figur 6 modifiziertes Ausführungsbeispiel. Es ist kein (Untersetzungs-) Getriebe zwischen den Antriebseinheiten 16A, 16B und den Räder 24 angeordnet. Die Antriebseinheiten 16A, 16B treiben die Räder 24 direkt an, z. B. in Form von Radnabenantriebseinheiten. Die Dauerbremsvorrichtungen 20A, 20B können bspw. direkt trieblich mit der jeweiligen Antriebseinheit 16A oder 16B oder der jeweiligen Radnabe eines der Räder 24 verbunden sein bzw. in diese integriert sein.

Die einzelnen Merkmale der in den Figuren 1 bis 7 dargestellten Ausführungsbeispiele können beliebig miteinander kombiniert werden, solange daraus keine technischen Widersprüche erwachsen. Beispielsweise können die Ausführungsbeispiele der Figuren 4 und 5 alternativ zu dem Zwischenwärmeübertrager 48 beispielsweise den Bypass 52 aufweisen (siehe Figuren 2 und 3), z. B. mit dem Wärmeübertrager 56. Beispielsweise können die Ausführungsbeispiele der Figuren 6 und 7 alternativ zu der Clausius-Rankine-Abwärmenutzungseinrichtung 12 eine Joule-Brayton Abwärmenutzungseinrichtung 21 aufweisen (siehe z. B. Figur 5). Beispielsweise können die Ausführungsbeispiele der Figuren 6 und 7 die Wärmeübertrager 34 auch extern der Dauerbremsvorrichtungen 20A, 20B aufweisen (siehe z. B. Figur 4). Beispielsweise können die Ausführungsbeispiele der Figuren 6 und 7 zusätzlich den Zwischenwärmeübertrager 48, die Ventilvorrichtung 50, den Bypass 52, die Drossel 54 und/oder den Wärmeübertrager 56 aufweisen.

Es ist auch möglich, dass die Abwärmenutzungseinrichtung 12 (z. B. einer der Figuren 1 bis 7) zusätzliche Abwärme von einem anderen System als der Dauerbremsvorrichtung 20 bezieht, z. B. mittels eines zusätzlichen Wärmeübertragers, der im Fluidkreislauf 30 angeordnet ist, zur thermischen Kopplung. Z. B. kann die Abwärmenutzungseinrichtung 12 mit einem Kühlkreislauf oder einer Abgasanlage einer Brennkraftmaschine thermisch gekoppelt sein, wenn der elektrische Antriebsstrang 10 als Teil eines Hybridantriebsstrangs konzipiert ist. Die Abwärmenutzungseinrichtung 12 kann auch mit einem Kühlkreislauf der Energieversorgungseinrichtung 14 (z. B. Batterie, Stromwandler (insb. DC-DC-Wandler), Stromverteiler, Leistungselektronik) thermisch gekoppelt sein.

Die Abwärmenutzungseinrichtung 12 kann auch mit einem Kühlkreislauf der elektrischen Antriebseinheit 16 zur Energierückgewinnung aus einer Abwärme der elektrischen Antriebseinheit 16 thermisch gekoppelt sein.

### Bezugszeichenliste

- 10: Elektrischer Antriebsstrang
- 12: Abwärmenutzungseinrichtung
- 14: Energieversorgungseinrichtung
- 16: Elektrische Antriebseinheit
- 16A: Erste elektrische Antriebseinheit
- 16B: Zweite elektrische Antriebseinheit
- 18: Getriebe
- 18A: Erstes Getriebe
- 18B: Zweites Getriebe
- 20: Dauerbremsvorrichtung
- 20A: Erste Dauerbremsvorrichtung
- 20B: Zweite Dauerbremsvorrichtung
- 21: Fluidkreislauf
- 22: Differentialgetriebe
- 24: Rad
- 26: Welle
- 28: Radwelle
- 30: Fluidkreislauf
- 32: Fördervorrichtung
- 34: Wärmeübertrager
- 36: Expansionsmaschine
- 38: Kühler
- 40: Bypass
- 42: Ventileinrichtung
- 44: Steuereinheit
- 46: Drossel
- 48: Zwischenwärmeübertrager / Vorwärmer
- 50: Ventilvorrichtung
- 52: Bypass
- 54: Drossel
- 56: Wärmeübertrager
- 58: Wärmepumpe

## Patentansprüche

1. Vorrichtung zur Energierückgewinnung für ein elektrisch angetriebenes Kraftfahrzeug, vorzugsweise Nutzfahrzeug, aufweisend:
eine elektrische Antriebseinheit (16) zum Antreiben des Kraftfahrzeugs;
eine Dauerbremsvorrichtung (20), die als ein hydrodynamischer Retarder ausgebildet und trieblich mit der elektrischen Antriebseinheit (16) verbunden oder verbindbar ist; und
eine Abwärmenutzungseinrichtung (12) mit einer Expansionsmaschine (36), die mit der Dauerbremsvorrichtung (20) zur Energierückgewinnung aus einer bei einem Bremsen der Dauerbremsvorrichtung (20) entstehenden Abwärme verbunden oder verbindbar ist, wobei:
die Abwärmenutzungseinrichtung (12) einen, vorzugsweise lüftergekühlten, Kühler (38), vorzugsweise einen Kondensator oder einen Gaskühler, aufweist, der stromabwärts der Expansionsmaschine (36) angeordnet ist, **dadurch gekennzeichnet,**
**dass** die Abwärmenutzungseinrichtung (12) einen Zwischenwärmeübertrager (48), der zum thermischen Koppeln einer Fluidleitung stromaufwärts des Kühlers (38) mit einer Fluidleitung stromabwärts des Kühlers (38) angeordnet ist, und eine Ventilvorrichtung (50), die zum Anpassen eines Fluidstroms durch den Kühler (38) und/oder den Zwischenwärmeübertrager (48) angeordnet ist, aufweist; oder
**dass** die Abwärmenutzungseinrichtung (12) einen Kühler-Bypass (52), der den Kühler (38) umgeht, und eine Ventilvorrichtung (50), die zum Anpassen eines Fluidstroms durch den Kühler (38) und/oder den Kühler-Bypass (52) angeordnet ist, aufweist; oder
**dass** die Abwärmenutzungseinrichtung (12) einen Wärmeübertrager (56), vorzugsweise einen Verdampfer oder einen Vorwärmer, einer Wärmepumpe (58) der Vorrichtung, der zum thermischen Koppeln mit einer Fluidleitung stromaufwärts des Kühlers (38) angeordnet ist, und eine Ventilvorrichtung (50), die zum Anpassen eines Fluidstroms durch den Kühler (38) und/oder den Wärmeübertrager (56) angeordnet ist, aufweist.

2. Vorrichtung nach Anspruch 1, wobei:
die Abwärmenutzungseinrichtung (12) auf einem Clausius-Rankine-Kreisprozess basiert; oder
die Abwärmenutzungseinrichtung (12) auf einem Joule-Brayton-Kreisprozess basiert.

3. Vorrichtung nach Anspruch 1 oder Anspruch 2, wobei:
in der Dauerbremsvorrichtung (20) ein Wärmeübertrager (34) integriert ist, der zum Übertragen einer Abwärme der Dauerbremsvorrichtung (20) auf einen Fluidkreislauf (30) der Abwärmenutzungseinrichtung (12) ausgebildet ist; oder
ein Wärmeübertrager (34) außerhalb der Dauerbremsvorrichtung (20) angeordnet ist, wobei der Wärmeübertrager (34) zum Übertragen einer Abwärme der Dauerbremsvorrichtung (20) auf einen Fluidkreislauf (30) der Abwärmenutzungseinrichtung (12) ausgebildet ist.

4. Vorrichtung nach Anspruch 3, wobei:
der Wärmeübertrager (34) ein Verdampfer ist, der zum Verdampfen eines Arbeitsfluids der Abwärmenutzungseinrichtung (12) ausgebildet ist; oder
der Wärmeübertrager (34) als ein Flüssigkeit-Gas-Wärmeübertrager (34), in dem ein gasförmiges Arbeitsfluid der Abwärmenutzungseinrichtung (12) erwärmbar ist, ausgebildet ist.

5. Vorrichtung nach einem der vorherigen Ansprüche, wobei:
die Abwärmenutzungseinrichtung (12) einen Expansionsmaschinen-Bypass (40), der die Expansionsmaschine (36) umgeht, und eine Ventileinrichtung (42), die zum Anpassen eines Fluidstroms durch die Expansionsmaschine (36) und/oder den Expansionsmaschinen-Bypass (40) angeordnet ist, aufweist.

6. Vorrichtung nach Anspruch 5, wobei:
die Abwärmenutzungseinrichtung (12) eine Drossel (46) aufweist, die in dem Expansionsmaschinen-Bypass (40) angeordnet und integriert mit oder separat zu der Ventileinrichtung (42) vorgesehen ist; und/oder
die Abwärmenutzungseinrichtung (12) eine Steuereinheit (44) aufweist, die dazu ausgebildet ist, die Ventileinrichtung (42) in Abhängigkeit von einem Betriebsparameter der Expansionsmaschine (36) und/oder einem Fluidparameter eines Arbeitsfluids der Abwärmenutzungseinrichtung (12), vorzugsweise stromaufwärts und/oder stromabwärts der Expansionsmaschine (36), zu betätigen.

7. Vorrichtung nach einem der vorherigen Ansprüche, wobei:
die Abwärmenutzungseinrichtung (12) eine Steuereinheit (44) aufweist, die dazu ausgebildet ist, die Ventilvorrichtung (50) in Abhängigkeit von einem Fluidparameter eines Arbeitsfluids der Abwärmenutzungseinrichtung (12), vorzugsweise stromaufwärts und/oder stromabwärts des Kühlers (38), zu betätigen.

8. Vorrichtung nach einem der vorherigen Ansprüche, wobei:
die elektrische Antriebseinheit (16) als eine elektrische Zentralantriebseinheit ausgeführt ist, und die Dauerbremsvorrichtung (20) direkt trieblich mit der elektrischen Zentralantriebseinheit, einem Getriebe (18) der Vorrichtung oder einem Rad (24) der Vorrichtung verbunden ist; oder
die elektrische Antriebseinheit (16A, 16B) als ein elektrischer Raddirektantrieb ausgeführt ist, und die Dauerbremsvorrichtung (20) direkt trieblich mit dem Raddirektantrieb oder einem Rad (24) der Vorrichtung verbunden ist; oder
die elektrische Antriebseinheit (16A, 16B) als ein radnaher elektrischer Einzelradantrieb ausgeführt ist, und die Dauerbremsvorrichtung (20) direkt trieblich mit dem radnahen elektrischen Einzelradantrieb, einem Getriebe (18), vorzugsweise einem Planentengetriebe, der Vorrichtung oder einem Rad (24) der Vorrichtung verbunden ist.

9. Vorrichtung nach einem der vorherigen Ansprüche, wobei:
die Abwärmenutzungseinrichtung (12) Wasser, ein Wasser-Glykol-Gemisch, ein organisches Fluid, ein anorganisches Fluid oder ein Alkohol als Arbeitsfluid aufweist; und/oder
die Abwärmenutzungseinrichtung (12) dazu ausgebildet ist, eine mittels der Expansionsmaschine (36) zurückgewonnene Energie elektrisch oder mechanisch zu speichern und/oder in ein Bordnetz des Kraftfahrzeugs einzuspeisen; und/oder
die Abwärmenutzungseinrichtung (12) mit oder ohne Arbeitsfluid-Phasenumwandlung betreibbar ist; und/oder
die Abwärmenutzungseinrichtung (12) eine Fördervorrichtung (32), vorzugsweise eine Pumpe oder einen Verdichter, aufweist, die stromaufwärts von der Expansionsmaschine (36) angeordnet ist, wobei vorzugsweise die Fördervorrichtung (32) trieblich mit der Expansionsmaschine (36) gekoppelt ist.

10. Vorrichtung nach einem der vorherigen Ansprüche, wobei:
die Abwärmenutzungseinrichtung (12) zusätzlich mit einer Brennkraftmaschine zur Energierückgewinnung aus einer Abwärme aus einem Kühlmittel und/oder einem Abgas der Brennkraftmaschine verbunden ist; und/oder
die Abwärmenutzungseinrichtung (12) zusätzlich mit einer Energieversorgungseinrichtung (14), die die elektrische Antriebseinheit (16) mit elektrischer Energie versorgt, zur Energierückgewinnung aus einer Abwärme der Energieversorgungseinrichtung (14) verbunden ist; und/oder
die Abwärmenutzungseinrichtung (12) zusätzlich mit der elektrischen Antriebseinheit (16) zur Energierückgewinnung aus einer Abwärme der elektrischen Antriebseinheit (16) verbunden ist.

11. Kraftfahrzeug, vorzugsweise Nutzfahrzeug, aufweisend eine Vorrichtung nach einem der vorherigen Ansprüche.

12. Verfahren zur Energierückgewinnung in einem elektrisch angetriebenen Kraftfahrzeug nach Anspruch 11 aufweisend:
Bremsen des Kraftfahrzeugs mittels der Dauerbremsvorrichtung (20); und
Antreiben der Expansionsmaschine (36) mittels einer Abwärme der Dauerbremsvorrichtung (20).

13. Verfahren nach Anspruch 12, ferner aufweisend:
Verdampfen oder Erwärmen eines Arbeitsfluids in oder außerhalb der Dauerbremsvorrichtung (20) mittels der Abwärme der Dauerbremsvorrichtung (20) und Zuführen des Arbeitsfluids zu der Expansionsmaschine (36); und/oder
Umgehen der Expansionsmaschine (36) mittels eines Bypasses (40), wenn eine Betriebsparameter der Expansionsmaschine (36) und/oder ein Fluidparameter eines Arbeitsfluids einen vorbestimmten Wert überschreitet, vorzugsweise ferner mit Drosseln des Arbeitsfluids beim Umgehen der Expansionsmaschine (36); und/oder
Speichern von elektrischer oder mechanischer Energie, die aus dem Antreiben der Expansionsmaschine (36) gewonnen wurde; und/oder
Rekuperieren von Wärmeenergie aus einem Arbeitsfluidstrom stromabwärts der Expansionsmaschine (36).

## Claims

1. Device for energy recovery for an electrically driven motor vehicle, preferably a commercial vehicle, the device comprising:
an electric drive unit (16) for driving the motor vehicle;
a permanent brake device (20), which is designed as a hydrodynamic retarder and is drivingly connected or connectable to the electric drive unit (16); and
a waste heat recovery device (12) with an expansion machine (36), which is connected or connectable to the permanent brake device (20) for energy recovery from a waste heat resulting from the braking of the permanent brake device (20) wherein:
the waste heat recovery device (12) comprises a, preferably fan-cooled, cooler (38), preferably a condenser or a gas cooler, which is arranged downstream of the expansion machine (36), **characterized in**
**that** the waste heat recovery device (12) comprises an intermediate heat exchanger (48), which is arranged for thermal coupling of a fluid line upstream of the cooler (38) to a fluid line downstream of the cooler (38), and a valve device (50), which is arranged to adapt a fluid flow through the cooler (38) and/or the intermediate heat exchanger (48); or
**that** the waste heat recovery device (12) comprises a cooler bypass (52), which bypasses the cooler (38), and a valve device (50), which is arranged to adapt a fluid flow through the cooler (38) and/or the cooler bypass (52); or
**that** the waste heat recovery device (12) comprises a heat exchanger (56), preferably an evaporator or a preheater, a heat pump (58) of the device, which is arranged for thermal coupling to a fluid line upstream of the cooler (38), and a valve device (50), which is arranged to adapt a fluid flow through the cooler (38) and/or the heat exchanger (56).

2. Device according to claim 1, wherein:
the waste heat recovery device (12) is based on a Clausius-Rankine cycle process; or
the waste heat recovery device (12) is based on a Joule-Brayton cycle process.

3. Device according to claim 1 or claim 2, wherein:
a heat exchanger (34) is integrated in the permanent brake device (20) and is configured to transfer waste heat from the permanent brake device (20) to a fluid circuit (30) of the waste heat recovery device (12); or
a heat exchanger (34) is arranged outside the permanent brake device (20), wherein the heat exchanger (34) is configured to transfer waste heat from the permanent brake device (20) to a fluid circuit (30) of the waste heat recovery device (12).

4. Device according to claim 3, wherein:
the heat exchanger (34) is an evaporator which is configured to evaporate a working fluid of the waste heat recovery device (12); or
the heat exchanger (34) is designed as a liquid-gas heat exchanger (34), in which a gaseous working fluid of the waste heat recovery device (12) is heatable.

5. Device according to any one of the preceding claims, wherein:
the waste heat recovery device (12) comprises an expansion machine bypass (40), which bypasses the expansion machine (36), and a valve device (42), which is arranged to adapt a fluid flow through the expansion machine (36) and/or the expansion machine bypass (40).

6. Device according to claim 5, wherein:
the waste heat recovery device (12) comprises a throttle (46), which is arranged in the expansion machine bypass (40) and is provided integrated with or separately from the valve device (42); and/or
the waste heat recovery device (12) comprises a control unit (44), which is configured to actuate the valve device (42) depending on an operating parameter of the expansion machine (36) and/or a fluid parameter of a working fluid of the waste heat recovery device (12), preferably upstream and/or downstream of the expansion machine (36).

7. Device according to any one of the preceding claims, wherein:
the waste heat recovery device (12) comprises a control unit (44), which is configured to actuate the valve device (50) depending on a fluid parameter of a working fluid of the waste heat recovery device (12), preferably upstream and/or downstream of the cooler (38).

8. Device according to any one of the preceding claims, wherein:
the electric drive unit (16) is embodied as an electric central drive unit, and the permanent brake device (20) is directly drivingly connected to the electrical central drive unit, a transmission (18) of the device or a wheel (24) of the device; or
the electric drive unit (16A, 16B) is embodied as an electric direct wheel drive, and the permanent brake device (20) is directly drivingly connected to the direct wheel drive or a wheel (24) of the device; or
the electric drive unit (16A, 16B) is embodied as an electric single-wheel drive positioned close to the wheel, and the permanent brake device (20) is directly drivingly connected to the electric single-wheel drive positioned close to the wheel, a transmission (18), preferably a planetary gearing, of the device or to a wheel (24) of the device.

9. Device according to any one of the preceding claims, wherein:
the waste heat recovery device (12) comprises water, a water-glycol mixture, an organic fluid, an inorganic fluid or an alcohol as working fluid; and/or
the waste heat recovery device (12) is configured to electrically or mechanically store energy recovered by means of the expansion machine (36) and/or to feed said energy into an on-board power supply of the motor vehicle; and/or
the waste heat recovery device (12) is operable with or without a phase transition of the working fluid; and/or
the waste heat recovery device (12) comprises a conveying device (32), preferably a pump or a compressor, which is arranged upstream of the expansion machine (36), wherein the conveying device (32) is preferably coupled drivingly to the expansion machine (36).

10. Device according to any one of the preceding claims, wherein:
the waste heat recovery device (12) is additionally connected to an internal combustion engine for energy recovery from waste heat from a coolant and/or an exhaust gas of the internal combustion engine; and/or
the waste heat recovery device (12) is additionally connected to an energy supply device (14), which supplies the electric drive unit (16) with electrical energy, for energy recovery from waste heat of the energy supply device (14); and/or
the waste heat recovery device (12) is additionally connected to the electric drive unit (16) for energy recovery from waste heat of the electric drive unit (16).

11. Motor vehicle, preferably a commercial vehicle, comprising a device according to any one of the preceding claims.

12. Method for energy recovery in an electrically driven motor vehicle according to claim 11, comprising:
braking the motor vehicle by means of the permanent brake device (20); and
driving the expansion machine (36) by means of waste heat of the permanent brake device (20).

13. Method according to claim 12, further comprising:
evaporating or heating a working fluid in or outside the permanent brake device (20) by means of the waste heat of the permanent brake device (20) and feeding the working fluid to the expansion machine (36); and/or
bypassing the expansion machine (36) by means of a bypass (40) if an operating parameter of the expansion machine (36) and/or a fluid parameter of a working fluid exceeds a predetermined value, preferably furthermore with throttling of the working fluid while the expansion machine (36) is being bypassed; and/or
storing electrical or mechanical energy obtained from the driving of the expansion machine (36); and/or
recovering thermal energy from a working fluid flow downstream of the expansion machine (36).

## Revendications

1. Dispositif de récupération d'énergie pour un véhicule automobile à propulsion électrique, de préférence un véhicule utilitaire, comprenant :
une unité (16) d'entraînement électrique pour entraîner le véhicule automobile ;
un dispositif (20) de freinage continu qui est réalisé sous la forme d'un ralentisseur hydrodynamique et qui est relié ou est apte à être relié par entraînement à l'unité (16) d'entraînement électrique ; et
un dispositif (12) de récupération de chaleur perdue avec une machine à expansion (36) qui est reliée ou apte à être reliée au dispositif (20) de freinage continu pour récupérer l'énergie provenant de la chaleur dégagée lors du freinage du dispositif (20) de freinage continu, dans lequel :
le dispositif (12) de récupération de chaleur perdue comprend un refroidisseur (38), de préférence refroidi par ventilateur, de préférence un condenseur ou un refroidisseur de gaz, qui est agencé en aval de la machine à expansion (36), **caractérisé en ce que**
le dispositif (12) de récupération de chaleur perdue comprend un échangeur de chaleur intermédiaire (48), qui est agencé pour relier thermiquement une conduite de fluide en amont du refroidisseur (38) à une conduite de fluide en aval du refroidisseur (38), et un dispositif (50) formant vanne qui est agencé pour adapter un écoulement de fluide à travers le refroidisseur (38) et/ou l'échangeur de chaleur intermédiaire (48) ; ou
**en ce que** le dispositif (12) de récupération de chaleur perdue comprend une dérivation (52) de refroidisseur qui contourne le refroidisseur (38) et un dispositif (50) formant vanne qui est agencé pour adapter un écoulement de fluide à travers le refroidisseur (38) et/ou la dérivation (52) de refroidisseur ; ou
**en ce que** le dispositif (12) de récupération de chaleur perdue comprend un échangeur de chaleur (56), de préférence un évaporateur ou un préchauffeur, d'une pompe à chaleur (58) du dispositif, qui est agencé de façon à être relié thermiquement à une conduite de fluide en amont du refroidisseur (38), et un dispositif (50) formant vanne qui est agencé pour adapter un écoulement de fluide à travers le refroidisseur (38) et/ou l'échangeur de chaleur (56).

2. Dispositif selon la revendication 1, dans lequel :
le dispositif (12) de récupération de chaleur perdue est basé sur un cycle de Clausius-Rankine ; ou
le dispositif (12) de récupération de chaleur perdue est basé sur un cycle de Joule-Brayton.

3. Dispositif selon la revendication 1 ou la revendication 2, dans lequel :
un échangeur de chaleur (34) est intégré dans le dispositif (20) de freinage continu et est conçu pour transférer la chaleur perdue du dispositif (20) de freinage continu vers un circuit de fluide (30) du dispositif (12) de récupération de chaleur perdue ; ou
un échangeur de chaleur (34) est agencé à l'extérieur du dispositif (20) de freinage continu, l'échangeur de chaleur (34) étant conçu pour transférer une chaleur perdue du dispositif (20) de freinage continu vers un circuit de fluide (30) du dispositif (12) de récupération de chaleur perdue.

4. Dispositif selon la revendication 3, dans lequel :
l'échangeur de chaleur (34) est un évaporateur conçu pour évaporer un fluide de travail du dispositif (12) de récupération de chaleur perdue ; ou
l'échangeur de chaleur (34) est conçu sous la forme d'un échangeur de chaleur liquide-gaz (34) dans lequel un fluide de travail gazeux du dispositif (12) de récupération de chaleur perdue est apte à être chauffé.

5. Dispositif selon l'une des revendications précédentes, dans lequel :
le dispositif (12) de récupération de chaleur perdue comprend une dérivation (40) de machine à expansion qui contourne la machine à expansion (36) et un dispositif (42) formant vanne agencé pour adapter un écoulement de fluide à travers la machine à expansion (36) et/ou la dérivation (40) de machine à expansion.

6. Dispositif selon la revendication 5, dans lequel :
le dispositif (12) de récupération de chaleur perdue comprend un étranglement (46) qui est agencé dans la dérivation (40) de machine à expansion et prévu de manière intégrée au dispositif (42) formant vanne, ou séparément de celui-ci ; et/ou
le dispositif (12) de récupération de chaleur perdue comprend une unité de commande (44) qui est conçue pour actionner le dispositif (42) formant vanne en fonction d'un paramètre de fonctionnement de la machine à expansion (36) et/ou d'un paramètre de fluide d'un fluide de travail du dispositif (12) de récupération de chaleur perdue, de préférence en amont et/ou en aval de la machine à expansion (36).

7. Dispositif selon l'une des revendications précédentes, dans lequel :
le dispositif (12) de récupération de chaleur perdue comprend une unité de commande (44) qui est conçue pour actionner le dispositif (50) formant vanne en fonction d'un paramètre de fluide d'un fluide de travail du dispositif (12) de récupération de chaleur perdue, de préférence en amont et/ou en aval du refroidisseur (38).

8. Dispositif selon l'une des revendications précédentes, dans lequel :
l'unité (16) d'entraînement électrique est réalisée sous la forme d'une unité d'entraînement électrique centrale, et le dispositif (20) de freinage continu est relié directement, par relation d'entraînement, à l'unité d'entraînement électrique centrale, à un engrenage (18) du dispositif ou à une roue (24) du dispositif ; ou
l'unité d'entraînement électrique (16A, 16B) est conçue comme un entraînement électrique direct de roue, et le dispositif (20) de freinage continu est relié directement à l'entraînement direct de roue ou à une roue (24) du dispositif ; ou
l'unité d'entraînement électrique (16A, 16B) est conçue sous la forme d'un système électrique individuel d'entraînement proche de la roue, et le dispositif (20) de freinage continu est relié directement au système électrique individuel d'entraînement proche de la roue, à un engrenage (18), de préférence un engrenage planétaire, du dispositif ou à une roue (24) du dispositif.

9. Dispositif selon l'une des revendications précédentes, dans lequel :
le dispositif (12) de récupération de chaleur perdue comprend, en tant que fluide de travail, de l'eau, un mélange eau-glycol, un fluide organique, un fluide inorganique ou un alcool ; et/ou
le dispositif (12) de récupération de chaleur perdue est conçu pour stocker électriquement ou mécaniquement une énergie récupérée au moyen de la machine à expansion (36) et/ou pour l'injecter dans un réseau de bord du véhicule automobile ; et/ou
le dispositif (12) de récupération de chaleur perdue est apte à fonctionner avec ou sans conversion de phase du fluide de travail ; et/ou
le dispositif (12) de récupération de chaleur perdue comprend un dispositif de transport (32), de préférence une pompe ou un compresseur, qui est agencé en amont de la machine à expansion (36), le dispositif de transport (32) étant de préférence relié, par relation d'entraînement, à la machine à expansion (36).

10. Dispositif selon l'une des revendications précédentes, dans lequel :
le dispositif (12) de récupération de chaleur perdue est en outre relié à un moteur à combustion interne pour la récupération d'énergie à partir de la chaleur perdue provenant d'un fluide de refroidissement et/ou d'un gaz d'échappement du moteur à combustion interne ; et/ou
le dispositif (12) de récupération de chaleur perdue est en outre relié à un dispositif (14) d'alimentation en énergie qui alimente l'unité (16) d'entraînement électrique en énergie électrique, afin de récupérer l'énergie contenue dans la chaleur perdue du dispositif (14) d'alimentation en énergie ; et/ou
le dispositif (12) de récupération de chaleur perdue est en outre relié à l'unité (16) d'entraînement électrique pour récupérer l'énergie à partir de la chaleur perdue de l'unité (16) d'entraînement électrique.

11. Véhicule automobile, de préférence véhicule utilitaire, comprenant un dispositif selon l'une quelconque des revendications précédentes.

12. Procédé de récupération d'énergie dans un véhicule automobile à propulsion électrique selon la revendication 11, comprenant :
le freinage du véhicule automobile au moyen du dispositif (20) de freinage continu ; et
l'entraînement de la machine à expansion (36) au moyen d'une chaleur perdue du dispositif (20) de freinage continu.

13. Procédé selon la revendication 12, comprenant en outre :
le fait d'évaporer ou de réchauffer un fluide de travail à l'intérieur ou à l'extérieur du dispositif (20) de freinage continu au moyen de la chaleur perdue du dispositif (20) de freinage continu et d'alimenter le fluide de travail à la machine à expansion (36) ; et/ou le fait de contourner la machine à expansion (36) au moyen d'une dérivation (40) lorsqu'un paramètre de fonctionnement de la machine à expansion (36) et/ou un paramètre d'un fluide de travail dépasse une valeur prédéterminée, comprenant en outre de préférence une réduction du débit du fluide de travail lors du contournement de la machine à expansion (36) ; et/ou
stocker l'énergie électrique ou mécanique obtenue à partir de l'entraînement de la machine à expansion (36) ; et/ou
récupérer l'énergie thermique d'un flux de fluide de travail en aval de la machine à expansion (36).
